# EUROPÄISCHE PATENTSCHRIFT

(11) **EP 3 568 893 B1**
(45) Veröffentlichungstag und Bekanntmachung des Hinweises auf die Patenterteilung: **19.10.2022**
(21) Anmeldenummer: 17818586.4
(22) Anmeldetag: 22.12.2017
(51) Int. Cl.: H02H 3/087, H02H 3/18, H02H 9/02, H02H 3/00

(54) **ELEKTRONISCHE SCHALTUNG ZUR ABSICHERUNG EINER ENERGIEVERSORGUNG EINER EMPFANGSEINRICHTUNG**
ELECTRONIC CIRCUIT FOR SECURING AN ENERGY SUPPLY OF A RECEIVING DEVICE
CIRCUIT ÉLECTRONIQUE DE PROTECTION D'UNE ALIMENTATION EN ÉNERGIE D'UN SYSTÈME DE RÉCEPTION

(30) Priorität: 12.01.2017 EP 17465501; 07.02.2017 DE 102017201893
(43) Veröffentlichungstag der Anmeldung: 20.11.2019
(73) Patentinhaber: Continental Automotive Technologies GmbH, 30165 Hannover (DE)
(72) Erfinder: BOROS, Zoltan, 300702 Timisoara (RO); KOHR, Rainer, 61279 Grävenwiesbach-Laubach (DE)
(74) Vertreter: Continental Corporation
(86) Internationale Anmeldenummer: PCT/EP2017/084438
(87) Internationale Veröffentlichungsnummer: WO 2018/130411

(56) Entgegenhaltungen:
- WO-A1-02/082612
- US-A1- 2008 204 958
- US-A1- 2009 009 919

## Beschreibung

Die vorliegende Erfindung betrifft eine Elektronische Schaltung zur Absicherung einer Energieversorgung einer Empfangseinrichtung.

Üblicherweise ist eine Empfangseinrichtung eines Globalen Satellitennavigationssystems außerhalb einer elektronischen Kontrolleinheit, welcher die Empfangseinrichtung zugeordnet ist. Häufig weist eine derartige Empfangseinrichtung einen internen rauscharmen Verstärker (LNA) auf, weshalb eine Energieversorgung für die Empfangseinrichtung vorgesehen werden muss. Eine Anforderung an automobile elektronische Kontrolleinheiten ist es, dass sämtliche Schaltungen, die mit externen Anschlüssen verbunden sind, gegenüber Kurzschluss zur Masse (GND) und Batteriespannung (+V_{bat}) abzusichern sind. Weiterhin können Anforderungen dahingehend bestehen, eine Möglichkeit zur Detektion eines Kurzschlusses des Antennenanschlusses sowie zum Erkennen ob eine Antenne an dem Antennenanschluss angeschlossen ist oder nicht.

Die WO 02 / 082612 A1 betrifft eine Schaltungsanordnung zur Sperrung hoher Ströme, insbesondere von Kurzschlussströmen, die einen ersten gesteuerten Schalter umfasst, dessen Schaltstrecke in einem Laststromkreis liegt. Weiterhin ist ein zweiter gesteuerter Schalter vorgesehen, der den ersten gesteuerten Schalter bei Auftreten hoher Ströme im Laststromkreis in einen sperrenden Zustand versetzt. Ein Steuereingang des zweiten gesteuerten Schalters ist an einen ersten Anschluss des ersten gesteuerten Schalters angeschlossen, wobei an den ersten Anschluss des ersten gesteuerten Schalters außerdem eine Last angeschlossen ist.

Aufgabe der Erfindung ist es eine elektronische Schaltung zur Absicherung einer Energieversorgung einer Empfangseinrichtung bereitzustellen. Dabei soll die elektronische Schaltung insbesondere möglichst kostengünstig herstellbar sein.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung beschreibt eine elektronische Schaltung zur Absicherung einer Energieversorgung einer Empangseinrichtung nach Anspruch 1.

In vorteilhafter Weise kann durch die Erfindung eine elektronische Schaltung bereitgestellt werden, mittels der eine Absicherung einer Energieversorgung einer Empfangseinrichtung realisierbar ist. Durch die Absicherung ist dabei insbesondere ein Erkennen und vorzugsweise Unterbindung eines elektronisch nicht erwünschten Verhaltens zum Schutze beispielsweise der Spannungsquelle oder der durch die Schaltung umfassten Komponenten gegenüber elektronischer Störung, Beschädigung oder Zerstörung umgesetzt. Durch die erfindungsgemäße Schaltung kann somit eine Absicherung gegenüber Überstrom im Versorgungspfad der Empfangseinrichtung, Umpolung der Spannung des Versorgungspfads, eines Kurzschlusses des Versorgungspfads zum Massepotential sowie ein Erkennen einer angeschlossenen Empfangseinrichtung an dem Versorgungspfad realisiert werden. Die Empfangseinrichtung kann zudem auch zum Senden von elektromagnetischen Wellen ausgestaltet sein. Bei der Empfangseinrichtung handelt es sich besonders bevorzugt um eine Empfangseinrichtung bzw. Antenne für ein Globales Satellitennavigationssystem. Bei der Empfangseinrichtung handelt es sich bevorzugt alternativ oder in Ergänzung um eine Sende-/Empfangseinrichtung bzw. Antenne zur Fahrzeug-zu-X Kommunikation.

Durch die erfindungsgemäße elektronische Schaltung kann der Einsatz kostenintensiver spezialisierter Komponenten, z.B. Bauelemente, vermieden werden, da diese mit handelsüblichen Komponenten realisierbar ist, wodurch die Herstellungskosten vergleichsweise niedrig sind.

Entsprechend einer bevorzugten Weiterbildung der Erfindung wird der Messwiderstand zumindest für die funktionelle Baugruppe zur Absicherung vor einem Überstrom in dem Versorgungspfad der Empfangseinrichtung sowie für die funktionelle Baugruppe zum Erkennen einer angeschlossenen Empfangseinrichtung herangezogen.

Vorzugsweise werden die erste und die zweite Schalteinrichtung zumindest für die funktionelle Baugruppe zur Absicherung vor einem Überstrom in dem Versorgungspfad der Empfangseinrichtung sowie für die funktionelle Baugruppe zur Absicherung gegenüber einer Umpolung der Spannung des Versorgungspfads herangezogen.

Durch die teilweise Verwendung von Komponenten für die Realisierung unterschiedlicher Absicherungsfunktionen können die Kosten der Schaltung in besonders vorteilhafter Weise zusätzlich verringert werden.

Entsprechend einer vorteilhaften Weiterbildung der Erfindung weisen für die erste Schaltkomponente und die zweite Schaltkomponente jeweils wenigstens einen Gate-Anschluss, einen Source-Anschluss und einen Drain-Anschluss auf, wobei die Source-Anschlüsse der ersten und zweiten Schaltkomponente zur Ausbildung der Reihenschaltung miteinander verbunden sind und wobei der Messwiderstand an den Drain-Anschluss der ersten Schaltkomponente in der Weise angeschlossen ist, dass die Schaltkomponenten über den Widerstand mit der Spannungsversorgung verbindbar sind. Zweckmäßigerweise handelt es sich bei der ersten Schaltkomponente und/oder der zweiten Schaltkomponente um Metall-Oxid-Halbleiter-Feldeffekttransistor, sog. MOSFETs.

Die funktionelle Baugruppe zum Schutz vor einem Überstrom in dem Versorgungspfad umfasst bevorzugt eine dritte Schaltkomponente, welche in der Weise mit dem Versorgungspfad und den Gates der ersten und/oder der zweiten Schaltkomponente verbunden ist, dass im Falle eines von der Art der dritten Schaltkomponente abhängigen Spannungsabfalls über den Messwiderstand die dritte Schaltkomponente leitfähig geschaltet wird, wobei in Folge der Leitfähigkeit der Strom im Versorgungspfad durch die erste und/oder zweite Schaltkomponente begrenzt wird. Somit wird unter Verwendung der dritten Schaltkomponente in Verbindung mit der ersten und/oder zweiten Schaltkomponente der Versorgungsstrom in vorteilhafter Weise geregelt. Für die dritte Schaltkomponente wird insbesondere ein Bipolartransistor verwendet. Zweckmäßigerweise sind die Basis- und Emitter-Anschlüsse des Transistors in Parallelschaltung zum Messwiderstand im Versorgungspfad geschaltet. Der Kollektor-Anschluss des Transistors ist entsprechend vorzugsweise mit den Gate-Anschlüssen der ersten und/oder zweiten Schaltkomponente verbunden. Die dritte Schaltkomponente wird bei einem in Abhängigkeit der Art der dritten Schaltkomponente abhängigen Spannungsabfalls über den Messwiderstand leitfähig. Für einen Bipolartransistor beträgt dieser Wert beispielsweise ca. 0,6 bis 0,7 V (Diffusionsspannung). In Folge der Leitfähigkeit der dritten Schaltkomponente werden die Gate-Spannungen der ersten und/oder zweiten Schaltkomponente erhöht und hierdurch der Strom im Versorgungspfad auf einen Wert begrenzt, welcher der Relation des von der Art der dritten Schaltkomponente abhängigen Spannungsabfalls sowie des Werts des Messwiderstands entspricht. Somit ist in vorteilhafter Weise eine Vorgabe eines maximalen Stroms im Versorgungspfad möglich.

Zweckmäßigerweise ist eine Diode in der Verbindung eines Anschlusses der dritten Schaltkomponente zu den Gates der ersten und/oder zweiten Schaltkomponenten vorgesehen, wobei die Kathode der Diode mit den Gates und die Anode mit dem Anschluss der dritten Schaltkomponente verbunden sind. Der Anschluss der dritten Schaltkomponente, welche mit den Gates der ersten und/oder zweiten Schaltkomponente verbunden ist, ist insbesondere ein Kollektor eines Bipolartransistors. In vorteilhafter Weise können durch die Diode die dritte Schaltkomponente und die Spannungsversorgung vor einem Rückstrom im Falle einer Umpolung des Versorgungspfads geschützt werden.

Einer bevorzugten Ausführungsform der Erfindung entsprechend umfasst die funktionelle Baugruppe zum Erkennen einer angeschlossenen Empfangseinrichtung zumindest eine Vergleichseinrichtung, insbesondere einen Komparator, zur Erfassung und zum Vergleich der Spannung über den Messwiderstand, wobei die Vergleichseinrichtung in der Weise ausgestaltet ist, dass mittels eines Ausgangssignals der Vergleichseinrichtung auf eine an den Versorgungspfad angeschlossene Empfangseinrichtung schließbar ist. Somit wird ermöglicht festzustellen, ob eine Empfangseinrichtung am Versorgungspfad bzw. einem dafür vorgesehenen Anschluss angeschlossen ist.

Die funktionelle Baugruppe zur Absicherung gegenüber einer Umpolung der Spannung des Versorgungspfads umfasst vorzugsweise zumindest eine Vergleichseinrichtung, insbesondere einen Komparator, zum Vergleich einer von der Spannungsquelle bereitgestellten Spannung mit einer der Empfangseinrichtung bereitzustellenden Spannung, wobei die Vergleichseinrichtung mit der ersten und der zweiten Schaltkomponente verbunden ist und die funktionelle Baugruppe zur Absicherung gegenüber einer Umpolung der Spannung des Versorgungspfads ausgestaltet ist, im Falle einer höheren der Empfangseinrichtung bereitzustellenden Spannung im Vergleich zur von der Spannungsquelle bereitgestellten Spannung die erste und/oder die zweite Schaltkomponente in der Weise anzusteuern, dass der Versorgungspfad unterbrochen wird. Dadurch kann ein Stromrückfluss zur Spannungsquelle verhindert werden.

Bevorzugt weist die Baugruppe zur Absicherung gegenüber einer Umpolung der Spannung des Versorgungspfads einen Signaleingang auf, wobei der Signaleingang mit der Vergleichseinrichtung zum Vergleich einer von der Spannungsquelle bereitgestellten Spannung mit einer der Empfangseinrichtung bereitzustellenden Spannung in der Weise verbunden ist, dass durch ein definiertes Signal auf dem Signaleingang eine Unterbrechung des Versorgungspfads mittels der ersten und/oder der zweiten Schaltkomponente durchführbar ist.

Gemäß einer weiteren bevorzugten Ausführungsform umfasst die funktionelle Baugruppe zum Erkennen eines Massekurzschlusses des Versorgungspfads zumindest einen Widerstand sowie zumindest eine Diode, wobei ein Signalanschluss zur Bereitstellung eines Ausgangssignals über den Widerstand in der Weise mit dem Versorgungspfad verbunden ist, dass eine der Empfangseinrichtung bereitzustellenden Spannung erfassbar ist, sodass auf einen Massekurzschluss des Versorgungspfads schließbar ist. Bei vorhandenem Massekurzschluss des Versorgungspfads fällt die Spannung am Signalanschluss in detektierbarer Weise, sodass eine Erkennung eines Kurzschlusses umsetzbar ist. Bevorzugt umfasst die funktionelle Baugruppe zum Erkennen eines Massekurzschlusses des Versorgungspfads zumindest eine erste und eine zweite Diode, wobei die Kathode der ersten Diode mit einer Versorgungsspannung und deren Anode mit der Kathode der zweiten Diode sowie dem Signalanschluss und dem Widerstand verbunden ist. Die Anode der zweiten Diode ist bevorzugt mit Massepotential bzw. Bezugspotential verbunden.

Die erfindungsgemäße elektronische Schaltung ist zweckmäßigerweise einem Prozessor zur Auswertung und Verarbeitung von Signalen in der Weise zugeordnet, dass das Signal zum Anzeigen einer angeschlossenen Empfangseinrichtung der funktionellen Baugruppe zum Erkennen einer angeschlossenen Empfangseinrichtung und/oder das Signal zum Anzeigen einer Umpolung des Versorgungspfads der funktionellen Baugruppe zur Absicherung gegenüber einer Umpolung der Spannung des Versorgungspfads und/oder das Signal zum Anzeigen eines Massekurzschlusses der funktionellen Baugruppe zum Erkennen eines Massekurzschlusses des Versorgungspfads dem Prozessor zur Auswertung und Verarbeitung zugeführt werden. Mittels des Prozessors ist unter Verwendung des Signaleingangs der funktionellen Baugruppe zur Absicherung gegenüber einer Umpolung eine Zu- oder Abschaltung der Spannungs- bzw. Energieversorgung der Empfangseinrichtung realisierbar, wodurch auf Erkannte Probleme reagiert werden kann. Fällt beispielsweise die Spannung bzw. das Signal zum Anzeigen eines Massekurzschlusses unter einen definierten Grenzwert, kann die durch den Prozessor erkannt und über den Signaleingang die Versorgung der Empfangseinrichtung unterbrochen werden.

Vorzugsweise sind der erste Komparator und der zweite Komparator als Dual-Komparator Baueinheit bzw. Dual-Differenzverstärker Baueinheit vorgesehen. Die erste Schalteinrichtung und die zweite Schalteinrichtung sind bevorzugt als Dual-Schaltkomponenten Baueinheit, insbesondere Dual-MOSFET Baueinheit, vorgesehen. Im Vergleich zu einzelnen Komparator bzw. MOSFET Bauelementen können somit weitere Kosten eingespart werden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

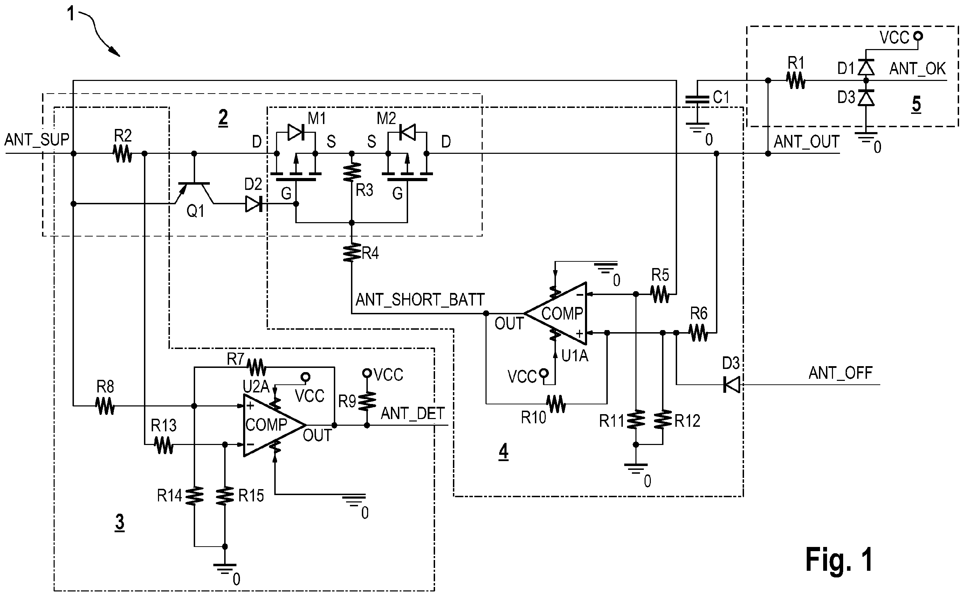

Die Fig. 1 zeigt in schematischer Darstellung ein Ausführungsbeispiel einer erfindungsgemäßen elektronischen Schaltung 1 zur Absicherung einer Energieversorgung einer Empfangseinrichtung eines Globalen Satellitennavigationssystems (GNSS).

Der Versorgungspfad zur Energieversorgung der Antenne ist mit der nicht dargestellten Spannungsversorgung über Anschluss ANT_SUP verbunden. Die Empfangseinrichtung bzw. Antenne ist in Fig. 1 nicht dargestellt. Auch ist eine Spule zur HF Entkopplung ("Bias Tee") sowie ein Hochfrequenzpfad in Fig. 1 nicht abgebildet. Der Anschluss ANT_OUT ist zur Verbindung mit der Antenne vorgesehen. Die den Versorgungspfad umfassende Schaltung 1 weist beispielsgemäß mehrere funktionelle Baugruppen auf, welche nachfolgend separat erläutert werden. Im Versorgungspfad sind in Reihe ein erster MOSFET M1 und ein zweiter MOSFET M2 sowie ein Widerstand R2 vorgesehen. Die MOSFETs sind entsprechend der beschriebenen Ausführungsform selbstsperrende p-Kanal MOSFETs Die Source-Anschlüsse S der MOSFETs M1 und M2 sind miteinander verbunden. Über Widerstand R2 sind die MOSFETs M1 und M2 mit der Spannungsversorgung verbunden, wofür Widerstand R2 im Versorgungspfad der Antenne am Drain-Anschluss D von MOSFET M1 angeschlossen ist.

### Überstromschutzeinrichtung 2

Die Schaltung 1 umfasst eine Einrichtung zur Absicherung gegenüber einem zu hohen Strom im Versorgungspfad. Zur Realisierung ist Transistor Q1 vorgesehen, dessen Basis- und Emitter-Anschlüsse in der Weise mit dem Versorgungspfad verbunden sind, dass im Falle eines Stromflusses und Erreichen eines Spannungsabfalls über Widerstand R2 von ca. 0,6 V der Transistor Q1 leitfähig geschaltet wird. Der Kollektor-Anschluss von Transistor Q1 ist mit den Gate-Anschlüssen G der MOSFETs M1 und M2 verbunden, sodass in Folge der Leitfähigkeit von Transistor Q1 die Gate-Spannung von M1 und M2 erhöht werden und hierdurch der Strom durch M1 und M2 im Versorgungspfad auf etwa 0,6V/R2 begrenzt wird. Mittels Vorgabe des Widerstandswertes von Widerstand R2 ist somit eine Vorgabe eines maximalen Stroms im Versorgungspfad möglich.

In der Verbindung des Kollektor-Anschlusses des Transistors Q1 zu den Gates der MOSFETs M1 und M2 ist Diode D2 vorgesehen, wodurch Transistor Q1 und die Spannungsversorgung an Anschluss ANT SUP vor einem Rückstrom über die parasitäre Diode von M2, den Widerstand R3 und die Basis-Kollektor Strecke von Transistor Q1 geschützt werden können, welcher in Folge einer Umpolung des Versorgungspfads auftreten könnte. Zur Vermeidung eines Rückstromes könnte zwar eine Diode im Versorgungspfad vorgesehen werden, dies hätte jedoch einen entsprechenden Spannungsabfall zur Konsequenz.

Wie nachfolgend noch beschrieben werden wird, wird Widerstand R2 auch für die Realisierung des Erkennens einer Antenne in Baugruppe 3 herangezogen. Ebenso werden die MOSFETs M1 und M2 auch für die Absicherung einer Umpolung des Versorgungspfads der Baugruppe 4 herangezogen.

### Baugruppe 3 zum Erkennen einer angeschlossenen Antenne

Mittels funktioneller Baugruppe 3 kann erkannt werden, ob eine Antenne am Ausgang der Antennenversorgung ANT_OUT angeschlossen ist. Dabei ist Komparator U2A zur Erfassung und zum Vergleich der Spannung über den Widerstand R2 vorgesehen. Der Ausgang ANT_DET von Komparator U2A ist gemäß dem Ausführungsbeispiel dann auf einem HIGH-Pegel, wenn die Spannung über Widerstand R2 über einem definierten Grenzwert ist, was einem definierten Stromfluss durch R2 entspricht. Der HIGH-Pegel an Ausgang ANT_DET zeigt entsprechend das Vorhandensein einer angeschlossenen Antenne an. Das Signal wird vorzugsweise einem der elektronischen Schaltung 1 zugeordneten Prozessor (nicht dargestellt) zur Auswertung und Verarbeitung zugeführt. Im Falle eines LOW-Pegels wird entsprechend darauf geschlossen, dass keine Antenne an Ausgang ANT_OUT angeschlossen ist. Die Baugruppe 3 ermöglicht somit festzustellen, ob eine Antenne an Anschluss ANT_OUT angeschlossen ist. Komparator U2A wird mittels Versorgungsspannung VCC betrieben. VCC kann beispielsweise häufig verwendete 3V bzw. 5V betragen.

### Baugruppe 4 zum Erkennen und zum Schutz vor einer Umpolung

Mittels Komparator U1A der Baugruppe 4 zum Erkennen einer Umpolung erfolgt ein Vergleich der Spannungen der Spannungsversorgung an ANT_SUP und am Anschluss der Antenne an ANT OUT. Ist die Spannung am Anschluss der Antenne ANT_OUT höher als die Spannung der Spannungsversorgung an ANT SUP - also bei Vorliegen einer Umpolung - werden die MOSFETs M1 und M2 durch das Ausgangssignal ANT_SHORT_BATT des Komparators U1A in der Weise angesteuert, dass der Stromkreis unterbrochen wird. Dadurch kann ein Stromrückfluss in die Spannungsquelle verhindert werden. Komparator U1A wird mittels Versorgungsspannung VCC betrieben.

Vorzugsweise wird das Ausgangssignal ANT_SHORT_BATT des Komparators U1A des Weiteren dem zugeordneten Prozessor zur Überwachung zugeführt. Dies ist in Fig. 1 nicht dargestellt.

Durch entsprechende Ansteuerung des Signaleingangs ANT_OFF, beispielsweise durch den zugeordneten Prozessor, wird Komparator U1a zweckmäßigerweise auch dazu verwendet, um die Energieversorgung der Antenne ein- und auszuschalten.

### Baugruppe 5 zum Erkennen eines Kurzschluss zu Masse

Mittels der Baugruppe 5 kann ein Massekurzschluss bzw. Kurzschluss zum Bezugspotential erkannt werden. Die Baugruppe umfasst einen Widerstand R1 sowie Dioden D1 und D3. Anschluss ANT_OUT ist über R1 mit Anschluss ANT_OK verbunden. Die Kathode von Diode D1 ist mit der Versorgungsspannung VCC und deren Anode mit der Kathode von Diode D3 sowie Anschluss ANT OK und Widerstand R1 verbunden. Die Anode von Diode D3 ist mit Massepotential bzw. Bezugspotential verbunden. Weiterhin kann ein Filterkondensator C1 vorgesehen werden, welcher mit Widerstand R1 bzw. Anschluss ANT_OUT sowie Massepotential verbunden ist.

Entsprechend des Ausführungsbeispiels fällt bei vorhandenem Massekurzschluss des Versorgungspfads die Spannung am Anschluss ANT_OK. Anschluss ANT_OK ist vorzugsweise mit dem zugeordneten Prozessor verbunden, so dass beispielsweise, wenn die Spannung an Anschluss ANT_OK unter einen definierten Grenzwert fällt, der Prozessor über Anschluss ANT_OFF die Versorgung der Antenne unterbrechen kann.

Beispielsweise kann der Prozessor in einem solchen Fall über den Steuereingang ANT_OFF durch entsprechende Ansteuerung die Energieversorgung der Antenne trennen, wodurch auch die Verlustleistung reduziert werden kann.

Die Widerstände R3 bis R15 dienen der weiteren Parametrierung des Schaltungsverhaltens an applikationsspezifische Anwendungen.

## Patentansprüche

1. Elektronische Schaltung zur Absicherung einer Energieversorgung einer Empfangseinrichtung, umfassend:
- einen Versorgungspfad zur Verbindung der Empfangseinrichtung mit einer Spannungsquelle, wobei der Versorgungspfad (ANT_SUP-ANT_OUT) wenigstens eine erste Schaltkomponente (M1) in Reihe mit einer zweiten Schaltkomponente (M2) sowie einen Messwiderstand (R2) aufweist,
- eine funktionelle Baugruppe (2) zur Absicherung vor einem Überstrom in dem Versorgungspfad,
- einer funktionellen Baugruppe (3) zum Erkennen einer angeschlossenen Empfangseinrichtung und zur Ausgabe eines Signals zum Anzeigen einer angeschlossenen Empfangseinrichtung,
- einer funktionellen Baugruppe (4) zur Absicherung gegenüber einer Umpolung der Spannung des Versorgungspfads und zur Ausgabe eines Signals zum Anzeigen einer Umpolung des Versorgungspfads, und
- einer funktionellen Baugruppe (5) zum Erkennen eines Massekurzschlusses des Versorgungspfads zur Ausgabe eines Signals zum Anzeigen eines Massekurzschlusses,
- einen Prozessor zur Auswertung und Verarbeitung von Signalen, wobei das Signal zum Anzeigen einer angeschlossenen Empfangseinrichtung und/oder das Signal zum Anzeigen einer Umpolung des Versorgungspfads und/oder das Signal zum Anzeigen eines Massekurzschlusses dem Prozessor zur Auswertung und Verarbeitung zugeführt werden.

2. Elektronische Schaltung gemäß Anspruch 1, **dadurch gekennzeichnet, dass** der Messwiderstand (R2) zumindest für die funktionelle Baugruppe zur Absicherung vor einem Überstrom in dem Versorgungspfad der Empfangseinrichtung sowie für die funktionelle Baugruppe zum Erkennen einer angeschlossenen Empfangseinrichtung herangezogen wird.

3. Elektronische Schaltung gemäß einem der vorhergehenden Ansprüche, **dadurch gekennzeichnet, dass** die erste und die zweite Schalteinrichtung (M1, M2) zumindest für die funktionelle Baugruppe zur Absicherung vor einem Überstrom in dem Versorgungspfad der Empfangseinrichtung sowie für die funktionelle Baugruppe zur Absicherung gegenüber einer Umpolung der Spannung des Versorgungspfads herangezogen werden.

4. Elektronische Schaltung gemäß einem der vorhergehenden Ansprüche, **dadurch gekennzeichnet, dass** die erste Schaltkomponente (M1) und die zweite Schaltkomponente (M2) jeweils wenigstens einen Gate-Anschluss (G), einen Source-Anschluss (S) und einen Drain-Anschluss (D) aufweisen, wobei die Source-Anschlüsse (S) der ersten und zweiten Schaltkomponente (M1, M2) zur Ausbildung der Reihenschaltung miteinander verbunden sind und wobei der Messwiderstand (R2) an den Drain-Anschluss (D) der ersten Schaltkomponente (M1) in der Weise angeschlossen ist, dass die Schaltkomponenten (M1, M2) über den Widerstand (R2) mit der Spannungsversorgung verbindbar sind.

5. Elektronische Schaltung gemäß einem der vorhergehenden Ansprüche, **dadurch gekennzeichnet, dass** die funktionelle Baugruppe zum Schutz vor einem Überstrom in dem Versorgungspfad eine dritte Schaltkomponente (Q1), insbesondere einen Bipolartransistor, umfasst, welche in der Weise mit dem Versorgungspfad und den Gates (G) der ersten und/oder der zweiten Schaltkomponente (M1, M2) verbunden ist, dass im Falle eines von der Art der dritten Schaltkomponente (Q1) abhängigen Spannungsabfalls über den Messwiderstand (R2) die dritte Schaltkomponente (Q1) leitfähig geschaltet wird, wobei in Folge der Leitfähigkeit der Strom im Versorgungspfad durch die erste und/oder zweite Schaltkomponente (M1,M2) begrenzt wird.

6. Elektronische Schaltung gemäß einem der Ansprüche 4 oder 5, **dadurch gekennzeichnet, dass** eine Diode (D2) in der Verbindung eines Anschlusses der dritten Schaltkomponente (Q1) zu den Gates (G) der ersten und/oder zweiten Schaltkomponenten (M1, M2) vorgesehen ist, wobei die Kathode der Diode mit den Gates (G) und die Anode mit dem Anschluss der dritten Schaltkomponente (Q1) verbunden sind.

7. Elektronische Schaltung gemäß einem der vorhergehenden Ansprüche, **dadurch gekennzeichnet, dass** die funktionelle Baugruppe (3) zum Erkennen einer angeschlossenen Empfangseinrichtung zumindest eine Vergleichseinrichtung (U2A), insbesondere einen Komparator, zur Erfassung und zum Vergleich der Spannung über den Messwiderstand (R2) umfasst, wobei die Vergleichseinrichtung (U2A) in der Weise ausgestaltet ist, dass mittels eines Ausgangssignals (ANT_DET) der Vergleichseinrichtung (U2A) auf eine an den Versorgungspfad angeschlossene Empfangseinrichtung schließbar ist.

8. Elektronische Schaltung gemäß einem der vorhergehenden Ansprüche, **dadurch gekennzeichnet, dass** die funktionelle Baugruppe (4) zur Absicherung gegenüber einer Umpolung der Spannung des Versorgungspfads zumindest eine Vergleichseinrichtung (U1A), insbesondere einen Komparator, zum Vergleich einer von der Spannungsquelle bereitgestellten Spannung mit einer der Empfangseinrichtung bereitzustellenden Spannung umfasst, wobei die Vergleichseinrichtung (U1A) mit der ersten und der zweiten Schaltkomponente (M1,M2) verbunden ist und die funktionelle Baugruppe (4) zur Absicherung gegenüber einer Umpolung der Spannung des Versorgungspfads ausgestaltet ist, im Falle einer höheren der Empfangseinrichtung bereitzustellenden Spannung im Vergleich zur von der Spannungsquelle bereitgestellten Spannung die erste und/oder die zweite Schaltkomponente (M1,M2) in der Weise anzusteuern, dass der Versorgungspfad unterbrochen wird.

9. Elektronische Schaltung gemäß Anspruch 8, **dadurch gekennzeichnet, dass** die Baugruppe (4) zur Absicherung gegenüber einer Umpolung der Spannung des Versorgungspfads einen Signaleingang (ANT_OFF) aufweist, wobei der Signaleingang (ANT_OFF) mit der Vergleichseinrichtung (U1A) zum Vergleich einer von der Spannungsquelle bereitgestellten Spannung mit einer der Empfangseinrichtung bereitzustellenden Spannung in der Weise verbunden ist, dass durch ein definiertes Signal auf dem Signaleingang (ANT_OFF) eine Unterbrechung des Versorgungspfads mittels der ersten und/oder der zweiten Schaltkomponente (M1, M2) durchführbar ist.

10. Elektronische Schaltung gemäß einem der vorhergehenden Ansprüche, **dadurch gekennzeichnet, dass** die funktionelle Baugruppe (5) zum Erkennen eines Massekurzschlusses des Versorgungspfads zumindest einen Widerstand (R1) umfasst, wobei ein Signalanschluss zur Bereitstellung eines Ausgangssignals (ANT_OK) über den Widerstand (R1) in der Weise mit dem Versorgungspfad verbunden ist, dass eine der Empfangseinrichtung bereitzustellenden Spannung erfassbar ist, sodass auf einen Massekurzschluss des Versorgungspfads schließbar ist.

## Claims

1. Electronic circuit for providing protection for an energy supply for a receiving device, comprising:
- a supply path for connecting the receiving device to a voltage source, wherein the supply path (ANT_SUP-ANT_OUT) has at least one first switching component (M1) in series with a second switching component (M2), and also a measuring resistor (R2),
- a functional assembly (2) for providing protection against an overcurrent in the supply path,
- a functional assembly (3) for detecting a connected receiving device and for outputting a signal for indicating a connected receiving device,
- a functional assembly (4) for providing protection against a polarity reversal for the voltage of the supply path and for outputting a signal for indicating a polarity reversal for the supply path, and
- a functional assembly (5) for detecting an earth short for the supply path and for outputting a signal for indicating an earth short,
- a processor for evaluating and processing signals, wherein the signal for indicating a connected receiving device and/or the signal for indicating a polarity reversal for the supply path and/or the signal for indicating an earth short are supplied to the processor for evaluating and processing.

2. Electronic circuit according to Claim 1, **characterized in that** the measuring resistor (R2) is used at least for the functional assembly for providing protection against an overcurrent in the supply path of the receiving device and also for the functional assembly for detecting a connected receiving device.

3. Electronic circuit according to either of the preceding claims, **characterized in that** the first and second switching devices (M1, M2) are used at least for the functional assembly for providing protection against an overcurrent in the supply path of the receiving device and also for the functional assembly for providing protection against a polarity reversal for the voltage of the supply path.

4. Electronic circuit according to one of the preceding claims, **characterized in that** the first switching component (M1) and the second switching component (M2) each have at least a gate connection (G), a source connection (S) and a drain connection (D), wherein the source connections (S) of the first and second switching components (M1, M2) are connected to one another to form the series circuit and wherein the measuring resistor (R2) is connected to the drain connection (D) of the first switching component (M1) such that the switching components (M1, M2) are connectable to the voltage supply via the resistor (R2).

5. Electronic circuit according to one of the preceding claims, **characterized in that** the functional assembly for protecting against an overcurrent in the supply path comprises a third switching component (Q1), in particular a bipolar transistor, that is connected to the supply path and the gates (G) of the first and/or the second switching component (M1, M2) such that in the event of a voltage drop across the measuring resistor (R2) that is dependent on the type of the third switching component (Q1), the third switching component (Q1) is turned on, wherein the on state results in the current in the supply path being limited by the first and/or second switching component (M1, M2).

6. Electronic circuit according to either of Claims 4 and 5, **characterized in that** there is provision for a diode (D2) in the connection between a connection of the third switching component (Q1) and the gates (G) of the first and/or second switching components (M1, M2), wherein the cathode of the diode is connected to the gates (G) and the anode is connected to the connection of the third switching component (Q1).

7. Electronic circuit according to one of the preceding claims, **characterized in that** the functional assembly (3) for detecting a connected receiving device comprises at least one comparison device (U2A), in particular a comparator, for detecting and comparing the voltage across the measuring resistor (R2), wherein the comparison device (U2A) is configured such that an output signal (ANT_DET) of the comparison device (U2A) is able to be used to infer a receiving device connected to the supply path.

8. Electronic circuit according to one of the preceding claims, **characterized in that** the functional assembly (4) for providing protection against a polarity reversal for the voltage of the supply path comprises at least one comparison device (U1A), in particular a comparator, for comparing a voltage provided by the voltage source with a voltage to be provided to the receiving device, wherein the comparison device (U1A) is connected to the first and second switching components (M1, M2), and the functional assembly (4) for providing protection against a polarity reversal for the voltage of the supply path is configured so as, in the event of a higher voltage to be provided to the receiving device in comparison with the voltage provided by the voltage source, to actuate the first and/or the second switching component (M1, M2) such that the supply path is interrupted.

9. Electronic circuit according to Claim 8, **characterized in that** the assembly (4) for providing protection against a polarity reversal for the voltage of the supply path has a signal input (ANT_OFF), wherein the signal input (ANT_OFF) is connected to the comparison device (U1A) for the purpose of comparing a voltage provided by the voltage source with a voltage to be provided to the receiving device such that a defined signal on the signal input (ANT_OFF) is able to perform an interruption to the supply path by means of the first and/or the second switching component (M1, M2).

10. Electronic circuit according to one of the preceding claims, **characterized in that** the functional assembly (5) for detecting an earth short for the supply path comprises at least one resistor (R1), wherein a signal connection for providing an output signal (ANT_OK) is connected to the supply path via the resistor (R1) such that a voltage to be provided to the receiving device is detectable, so that an earth short for the supply path is inferrable.

## Revendications

1. Circuit électronique permettant de protéger une alimentation en énergie d'un dispositif de réception, comprenant :
- un chemin d'alimentation permettant de relier le dispositif de réception à une source de tension, le chemin d'alimentation (ANT_SUP-ANT_OUT) présentant au moins un premier composant de commutation (M1) en série avec un deuxième composant de commutation (M2) ainsi qu'une résistance de mesure (R2),
- un sous-ensemble fonctionnel (2) pour la protection contre une surintensité de courant dans le chemin d'alimentation,
- un sous-ensemble fonctionnel (3) pour l'identification d'un dispositif de réception connecté et pour la sortie d'un signal pour l'indication d'un dispositif de réception connecté,
- un sous-ensemble fonctionnel (4) pour la protection contre une inversion de polarité de la tension du chemin d'alimentation et pour la sortie d'un signal pour l'indication d'une inversion de polarité du chemin d'alimentation, et
- un sous-ensemble fonctionnel (5) pour l'identification d'un court-circuit à la masse du chemin d'alimentation afin de sortir un signal pour l'indication d'un court-circuit à la masse,
- un processeur pour l'évaluation et le traitement de signaux, le signal pour l'indication d'un dispositif de réception connecté et/ou le signal pour l'indication d'une inversion de polarité du chemin d'alimentation et/ou le signal pour l'indication d'un court-circuit à la masse étant amenés au processeur pour l'évaluation et le traitement.

2. Circuit électronique selon la revendication 1, **caractérisé en ce que** la résistance de mesure (R2) est utilisée au moins pour le sous-ensemble fonctionnel pour la protection contre une surintensité de courant dans le chemin d'alimentation du dispositif de réception ainsi que pour le sous-ensemble fonctionnel pour l'identification d'un dispositif de réception connecté.

3. Circuit électronique selon l'une quelconque des revendications précédentes, **caractérisé en ce que** le premier et le deuxième dispositif de commutation (M1, M2) sont utilisés au moins pour le sous-ensemble fonctionnel pour la protection contre une surintensité de courant dans le chemin d'alimentation du dispositif de réception ainsi que pour le sous-ensemble fonctionnel pour la protection contre une inversion de polarité de la tension du chemin d'alimentation.

4. Circuit électronique selon l'une quelconque des revendications précédentes, **caractérisé en ce que** le premier composant de commutation (M1) et le deuxième composant de commutation (M2) présentent respectivement au moins une borne de grille (G), une borne de source (S) et une borne de drain (D), les bornes de source (S) du premier et du deuxième composant de commutation (M1, M2) étant reliées pour réaliser un montage en série les unes avec les autres, et la résistance de mesure (R2) étant connectée à la borne de drain (D) du premier composant de commutation (M1) de telle sorte que les composants de commutation (M1, M2) peuvent être reliés à l'alimentation en tension à travers la résistance (R2).

5. Circuit électronique selon l'une quelconque des revendications précédentes, **caractérisé en ce que** le sous-ensemble fonctionnel comprend pour la protection contre une surintensité de courant dans le chemin d'alimentation un troisième composant de commutation (Q1), en particulier un transistor bipolaire, qui est relié au chemin d'alimentation et aux grilles (G) du premier et/ou du deuxième composant de commutation (M1, M2) de telle sorte qu'en cas de chute de tension dépendante du type du troisième composant de commutation (Q1), le troisième composant de commutation (Q1) est monté conducteur à travers la résistance de mesure (R2), dans lequel, suite à la conductivité, le courant dans le chemin d'alimentation est limité par le premier et/ou le deuxième composant de commutation (M1, M2).

6. Circuit électronique selon l'une quelconque des revendications 4 ou 5, **caractérisé en ce qu'**une diode (D2) est prévue dans la liaison d'une borne du troisième composant de commutation (Q1) avec les grilles (G) du premier et/ou du deuxième composant de commutation (M1, M2), la cathode de la diode étant reliée aux grilles (G) et l'anode étant reliée à la borne du troisième composant de commutation (Q1).

7. Circuit électronique selon l'une quelconque des revendications précédentes, **caractérisé en ce que** le sous-ensemble fonctionnel (3) comprend pour l'identification d'un dispositif de réception connecté au moins un dispositif de comparaison (U2A), en particulier un comparateur, pour la détection et la comparaison de la tension à travers la résistance de mesure (R2), le dispositif de comparaison (U2A) étant conçu de telle sorte que le signal de sortie (ANT_DET) du dispositif de comparaison (U2A) permet de conclure à un dispositif de réception connecté au chemin d'alimentation.

8. Circuit électronique selon l'une quelconque des revendications précédentes, **caractérisé en ce que** le sous-ensemble fonctionnel (4) pour la protection contre une inversion de polarité de la tension du chemin d'alimentation comprend au moins un dispositif de comparaison (U1A), en particulier un comparateur, pour la comparaison d'une tension fournie par la source de tension avec une tension à fournir au dispositif de réception, le dispositif de comparaison (U1A) étant relié au premier et au deuxième composant de commutation (M1, M2), et le sous-ensemble fonctionnel (4) pour la protection contre une inversion de polarité de la tension du chemin d'alimentation est conçu, dans le cas d'une tension à fournir au dispositif de réception supérieure en comparaison avec la tension fournie par la source de tension, pour piloter le premier et/ou le deuxième composant de commutation (M1, M2) de façon à interrompre le chemin d'alimentation.

9. Circuit électronique selon la revendication 8, **caractérisé en ce que** le sous-ensemble (4) pour la protection contre une inversion de polarité de la tension du chemin d'alimentation présente une entrée de signal (ANT_OFF), l'entrée de signal (ANT_OFF) étant reliée au dispositif de comparaison (U1A) pour la comparaison d'une tension fournie par la source de tension avec une tension à fournir au dispositif de réception de telle sorte qu'un signal défini à l'entrée de signal (ANT_OFF) permet d'effectuer une interruption du chemin d'alimentation au moyen du premier et/ou du deuxième composant de commutation (M1, M2).

10. Circuit électronique selon l'une quelconque des revendications précédentes, **caractérisé en ce que** le sous-ensemble fonctionnel (5) pour l'identification d'un court-circuit à la masse du chemin d'alimentation comprend au moins une résistance (R1), une borne de signal pour la fourniture d'un signal de sortie (ANT_OK) étant reliée à travers la résistance (R1) au chemin d'alimentation de telle sorte qu'une tension à fournir au dispositif de réception peut être détectée de sorte qu'il est possible de conclure à un court-circuit à la masse du chemin d'alimentation.
